(19) Europäisches Patentamt
European Patent Office
Office européen des brevets

(11) **EP 2 871 594 A2**

(12) **EUROPEAN PATENT APPLICATION**

(43) Date of publication:
**13.05.2015 Bulletin 2015/20**

(51) Int Cl.:
***G06K 9/32*** *(2006.01)*

(21) Application number: **14191620.5**

(22) Date of filing: **04.11.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **06.11.2013 CN 201310547631**

(71) Applicant: **Xiaomi Inc.**
**Beijing 100085 (CN)**

(72) Inventor: **Li, Jiajia**
**Haidian District,**
**Beijing (CN)**

(74) Representative: **Hanna, Peter William Derek et al**
**Hanna Moore & Curley**
**13 Lower Lad Lane**
**Dublin 2 (IE)**

(54) **Method, device, TV and system for recognizing TV station logo**

(57) The present disclosure discloses a method, a device, a TV (720, 110) and a system for recognizing a TV station logo, which belong to the field of image recognition. The method includes: obtaining a TV screen image (202, 305, 403); for each pre-stored standard TV station logo, selecting an area corresponding to position information of the standard TV station logo from the TV screen image according to the position information as a matching area of the standard TV station logo, the position information being a position of the standard TV station logo in the TV screen (204, 307, 404); and recognizing a TV station logo in the TV screen image based on a result of matching respective standard TV station logos with the corresponding matching areas (206, 405). The present disclosure reduces the size of the matching area to be the same as that of the standard TV station logo, solves the problem of low speed for logo recognition due to that the selected matching area from the TV screen image is large in the related art, and achieves the effects of reducing the matching area and improving the speed for logo recognition.

202
obtain a TV screen image

204
for each pre-stored standard logo, select an area corresponding to position information of the standard logo from the TV screen image according to the position information as a matching area of the standard logo, the position information being a position of the standard logo in the TV screen

206
recognize a logo in the TV screen image based on a result of matching respective standard logos with the corresponding matching areas

Fig. 2

**Description**

**TECHNICAL FIELD**

The present disclosure generally relates to the field of image recognition, and more particularly, to a method, a device, a television (TV) and a system for recognizing a TV station logo.

**BACKGROUND**

A TV needs to recognize the currently broadcasted channel and notify the channel name to the user when broadcasting television programs. A digital TV can judge the currently broadcasted channel based on a comparison table provided by a provider of a set-top box, while an analog TV usually judges the currently broadcasted channel based on a frequency point table. Since the frequency point tables for the same channel are not the same across the country, it is challenging to judge the channel being broadcasted by the analog TV through a frequency point table.

The recognition of the channel being broadcasted by an analog TV may also be achieved through TV station logo recognition. Since each channel has its own unique TV station logo, it is easy to know the channel name after recognizing the TV station logo of the currently broadcasted channel. The relevant method for recognizing the TV station logo includes: obtaining a TV screen image; selecting a top quadrant area of the TV screen image as a matching area; performing a graphic retrieval by substituting all the standard TV station logos pre-stored in a database into the matching area one by one; and finally selecting the standard TV station logo with a highest matching probability according to the matching probabilities obtained by the graphic retrieval as the TV station logo of the currently broadcasted TV channel. The graphic retrieval indicates matching and searching between the standard TV station logos in the database and the image in the matching area.

During the implementation of the present disclosure, at least the following deficiencies are found: in the relevant technologies, the top quadrant area of the TV screen image is selected as the matching area; however, nowadays the screen size of the TV is becoming increasingly large, and accordingly, the selected matching area becomes too large resulting in an increase of the calculation amount when using the relevant technologies, and thus causes the speed of the TV station logo recognition to be too slow.

**SUMMARY**

A method, a device, a TV and a system for recognizing a TV station logo is provided by the invention in accordance with the claims which follow.

In order to solve the problem of low speed for TV station logo recognition, in particular when the selected matching area from the TV screen image is large, the embodiments of the present disclosure provide a method, a device, a TV and a system for recognizing a TV station logo. The technical solutions are as follow.

According to a first aspect of embodiments of the present disclosure, there is provided a method for recognizing a TV station logo, including:

obtaining a TV screen image;
for each pre-stored standard TV station logo, selecting an area corresponding to a position information of the standard TV station logo from the TV screen image according to the position information as a matching area of the standard TV station logo, the position information being a position of the standard TV station logo in the TV screen; and
recognizing the TV station logo in the TV screen image based on a result of matching respective standard TV station logos with the corresponding matching areas.

In a first possible implementation, said recognizing the TV station logo in the TV screen image based on the result of matching respective standard TV station logos with the corresponding matching areas includes:

converting a color space of the TV screen image into a color space in which a luminance and a chrominance are separated;
for each standard TV station logo, calculating a difference between a luminance value of each pixel in the standard TV station logo and a luminance value of a corresponding pixel in the corresponding matching area;
calculating a sum of the differences calculated for respective pixels so as to obtain a matching value; and
recognizing the standard TV station logo with the minimum matching value as the TV station logo in the TV screen image.

In combination with the first possible implementation in the first aspect, in a second possible implementation, said calculating the difference between the luminance value of each pixel in the standard TV station logo and the luminance value of the corresponding pixel in the corresponding matching area includes:

for each pixel in the standard TV station logo, detecting whether the luminance value of the pixel is 0; and
if the luminance value of the pixel is not 0, calculating the difference between the luminance value of the pixel and the luminance value of corresponding pixel in the corresponding matching area.

In combination with the first possible implementation in the first aspect, in a third possible implementation, the method further includes:
obtaining a matching threshold value to which the standard TV station logo with the minimum matching value corresponds, the matching threshold value being positively correlated with a size of an area of the standard TV station logo;

comparing the minimum matching value with the matching threshold value;
if the comparison result is that the minimum matching value is larger than the matching threshold value, which indicates the recognition fails, sending the TV screen image to a server; and
if the comparison result is that the minimum matching value is less than the matching threshold value, recognizing the standard TV station logo with the minimum matching value as the TV station logo in the TV screen image.

In combination with the first aspect, the first possible implementation in the first aspect, the second possible implementation in the first aspect, or the third possible implementation in the first aspect; in a fourth possible implementation, the method further includes:

detecting whether basic information of the standard TV station logo stored in a server was updated, the basic information including the first two or all of the standard TV station logo, the position information of the standard TV station logo, and a matching threshold value of the standard TV station logo; and
if it is detected that there was an update, downloading the basic information of the standard TV station logo from the server and updating the same.

In combination with the fourth possible implementation in the first aspect, in a fifth possible implementation, said downloading the basic information of the standard TV station logo from the server and updating the same includes:

sending local region information to the server; and
receiving the basic information of at least one standard TV station logo fed back by the server based on the local region information.

In combination with the first aspect, the first possible implementation in the first aspect, the second possible implementation in the first aspect, the third possible implementation in the first aspect, the fourth possible implementation in the first aspect, or the fifth possible implementation in the first aspect; in a sixth possible implementation, the method further includes:

recording continuous n times of recognition results of a channel to which the TV screen image corresponds, $n > 1$;
detecting whether there are more than m times of the same recognition result in the continuous n times of recognition results, $1 \leq m < n$; and
if the detection result is that there are more than m times of the same recognition result, selecting the same recognition result as a correct recognition result, and creating a corresponding relation between the correct recognition result and the channel.

In combination with the sixth possible implementation in the first aspect, in a seventh possible implementation, the method further includes:

replacing the earliest recognition result in the continuous n times of recognition results by the last recognition result of the channel to which the TV screen image corresponds;
newly detecting whether there are more than m times of the same recognition result in the continuous n times of recognition results;
if the detection result is that there are more than m times of the same recognition result, continuing to detect whether this same recognition result is the same as the last correct recognition result; and
if the detection result is different, taking the same recognition result detected this time as a new correct recognition result.

According to a second aspect of embodiments of the present disclosure, there is provided a device for recognizing a TV station logo, including:

an image obtaining module configured to obtain a TV screen image;
an area selection module configured to, for each pre-stored standard TV station logo, select an area corresponding to position information of the standard TV station logo from the TV screen image according to the position information as a matching area of the standard TV station logo, the position information being a position of the standard TV station logo in the TV screen; and
a TV station logo recognition module configured to recognize the TV station logo in the TV screen image based on a result of matching respective standard TV station logos with the corresponding matching areas.

In a first possible implementation, the TV station logo recognition module includes:

a color conversion unit configured to convert a color space of the TV screen image into a color space in which a luminance and a chrominance are separated;
a difference calculation unit configured to, for each standard TV station logo, calculate a difference between a luminance value of each pixel of the standard TV station logo and a luminance value of a corresponding pixel in the corresponding matching area;
a difference summing unit configured to calculate a sum of the differences calculated for respective pixels so as to obtain a matching value; and
a TV station logo recognition unit configured to recognize the standard TV station logo with the minimum matching value as the TV station logo in the TV screen image.

In combination with the first possible implementation in the second aspect, in a second possible implementation, the difference calculation unit includes:

a luminance detection sub-unit configured to, for each pixel in the standard TV station logo, detect whether a luminance value of the pixel is 0; and
a difference calculation sub-unit configured to, if the luminance value of the pixel is not 0, calculate the difference between the luminance value of the pixel and the luminance value of corresponding pixel in the corresponding matching area.

In combination with the first possible implementation in the second aspect, in a third possible implementation, the TV station logo recognition module further includes:

a threshold value obtaining unit configured to obtain a matching threshold value to which the standard TV station logo with the minimum matching value corresponds, the matching threshold value being positively correlated with a size of an area of the standard logo;
a threshold value comparison unit configured to compare the minimum matching value with the matching threshold value;
a first execution unit configured to, if the comparison result is that the minimum matching value is larger than the matching threshold value, which indicates the recognition fails, send the TV screen image to a server; and
a second execution unit configured to, if the comparison result is that the minimum matching value is less than the matching threshold value, recognize the standard TV station logo with the minimum matching value as the TV station logo in the TV screen image.

In combination with the second aspect, the first possible implementation in the second aspect, the second possible implementation in the second aspect, or the third possible implementation in the second aspect; in a fourth possible implementation, the device further includes:

an information detection module configured to detect whether basic information of the standard TV station logo stored in a server was updated, the basic information including the first two or all of the standard TV station logo, the position information of the standard TV station logo, and a matching threshold value of the standard TV station logo; and
an information download module configured to, if it is detected that there was an update, download the basic information of the standard TV station logo from the server and update the same.

In combination with the fourth possible implementation in the second aspect, in a fifth possible implementation, the information download module includes:

an information sending unit configured to send local region information to the server; and
an information receiving unit configured to receive the basic information of at least one standard TV station logo fed back by the server based on the local region information.

In combination with the second aspect, the first possible implementation in the second aspect, the second possible implementation in the second aspect, the third possible implementation in the second aspect, the fourth possible implementation in the second aspect, or the fifth possible implementation in the second aspect; in a sixth possible implementation, the device further includes:

a result recording module configured to record continuous n times of recognition results of a channel to which the TV screen image corresponds, n> 1;
a first detection module configured to detect whether there are more than m times of the same recognition result in the continuous n times of recognition results, $1 \leq m < n$; and
a first execution module configured to, if the detection result is that there are more than m times of the same recognition result, select the same recognition result as a correct recognition result, and create a corresponding relation between the correct recognition result and the channel.

In combination with the sixth possible implementation in the second aspect, in a seventh possible implementation, the device further includes:

a result replacement module configured to replace the earliest recognition result in the continuous n times of recognition results by the last recognition result of the channel to which the TV screen image corresponds;
a second detection module configured to newly detect whether there are more than m times of the same recognition result in the continuous n times of recognition results;
a third detection module configured to, if the detection result is that there are more than m times of the same recognition result, continue to detect whether this same recognition result is the same as the last correct recognition result; and
a second execution module configured to, if the detection result is different, take the same recognition result detected this time as a new correct recognition result.

According to a third aspect of embodiments of the present disclosure, there is provided a TV, including: the device for recognizing the TV station logo according to any one of the second aspect or the possible implementations of the second aspect.
According to a fourth aspect of embodiments of the present disclosure, there is provided a TV, including:

one or more processors;
a memory; and
one or more modules stored in the memory and being configured to be executed by the one or more processors, the one or more modules having the following functions:
obtaining a TV screen image;
for each pre-stored standard TV station logo, selecting an area corresponding to position information of the standard TV station logo from the TV screen image according to the position information as a matching area of the standard TV station logo, the position information being a position of the standard TV station logo in the TV screen; and
recognizing a TV station logo in the TV screen image based on a result of matching respective standard TV station logos with the corresponding matching areas

According to a fifth aspect of embodiments of the present disclosure, there is provided a system for recognizing a TV station logo, including a TV and a server connected with the TV;
the TV is the TV according to any one of the third aspect or the fourth aspect.
According to a sixth aspect of embodiments of the present disclosure, there is provided a program product having stored therein instructions that, when executed by one or more processors of a TV, cause the TV to perform: obtaining a TV screen image; for each pre-stored standard TV station logo, selecting an area corresponding to position information of the standard TV station logo from the TV screen image according to the position information as a matching area of the standard TV station logo, the position information being a position of the standard TV station logo in the TV screen; and recognizing the TV station logo in the TV screen image based on a result of matching respective standard TV station logos with the corresponding matching areas.

The technical solutions provided by the embodiments of the present disclosure may include the following advantageous effects:

after obtaining the TV screen image, the area corresponding to the position information of the standard logo is selected from the TV screen image according to the position information as the matching area of the standard logo for each pre-stored standard logo, and then the logo in the TV screen image is recognized based on the result of matching respective standard logos with the corresponding matching areas, such implementation reduces the size of the matching area to be the same as that of the standard logo, thereby solving the problem of low speed for logo recognition due to that the selected matching area from the TV screen image is large in the related art, and achieving the effects of reducing the matching area and improving the speed for logo recognition.

BRIEF DESCRIPTION OF THE DRAWINGS

In order to explain the embodiments of the present disclosure more clearly, the simple introduction of the drawings used for describing the embodiments will be given below.

Fig. 1 is an exemplary structural diagram of an implementation environment involved in a method for recognizing a TV station logo provided by one embodiment of the present disclosure;
Fig. 2 is an exemplary method flow chart of a method for recognizing a TV station logo provided by one embodiment of the present disclosure;
Fig. 3A is an exemplary method flow chart of a method for recognizing a TV station logo provided by another embodiment of the present disclosure;
Figs. 3B and 3C are exemplary diagrams of TV station logo positions involved in the method for recognizing the TV station logo provided by one embodiment of the present disclosure;
Fig. 3D is an exemplary diagram involved in obtaining position information in the method for recognizing the TV station logo provided by one embodiment of the present disclosure;
Fig. 4 is an exemplary method flow chart of a method for recognizing a TV station logo provided by another embodiment of the present disclosure;
Fig. 5 is an exemplary block diagram of a device for recognizing a TV station logo provided by one embodiment of the present disclosure;
Fig. 6 is an exemplary block diagram of a device for recognizing a TV station logo provided by another embodiment of the present disclosure;
Fig. 7 is an exemplary block diagram of a system for recognizing a TV station logo provided by one embodiment of the present disclosure; and
Fig. 8 is an exemplary diagram of a TV involved in respective embodiments of the present disclosure.

Specific embodiments in this disclosure have been shown by way of example in the foregoing drawings and are hereinafter described in detail.

## DETAILED DESCRIPTION

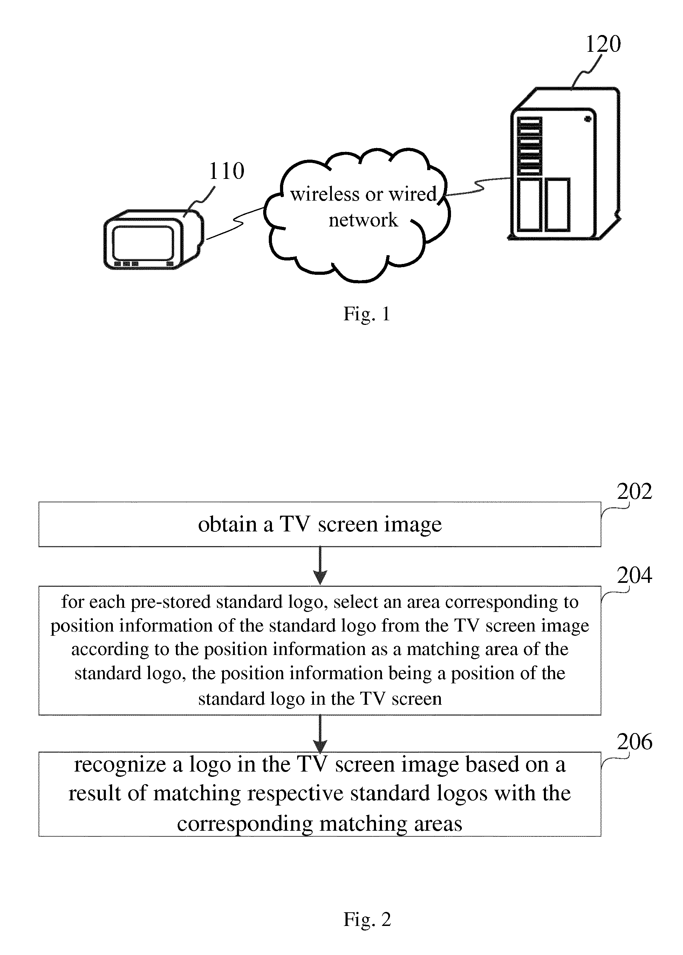

The present disclosure will be further described in detail with reference to the accompanying drawings.
Referring to Fig. 1, which illustrates an exemplary structural diagram of an implementation environment involved in a method for recognizing a TV station logo (called "logo" for short below) provided by one embodiment of the present disclosure, the implementation environment includes a TV 110 and a server 120.
The TV 110 is an analog TV.
The TV 110 is connected to the server 120 via a wired network or a wireless network.
The server 120 may be one server, or a server group consisted of several servers, or a cloud computing service center. A standard TV station logo (called "standard logo" for short below) database in the server 120 stores basic information of respective standard logos, and the basic information includes standard logos and position information of standard logos; besides, the basic information may further include one or more information of a matching threshold value of the standard logo, and a channel name or a channel network ID (Identify) corresponding to the standard logo.
Referring to Fig. 2, which illustrates an exemplary method flow chart of a method for recognizing a logo provided by one embodiment of the present disclosure, the method for recognizing a logo is applied in the TV side of the implementation environment shown in Fig. 1. The method for recognizing a logo may include the following steps.
In step 202, a TV screen image is obtained.
In step 204, for each pre-stored standard logo, an area corresponding to position information of the standard logo is selected from the TV screen image according to the position information as a matching area of the standard logo, and the position information is a position of the standard logo in the TV screen.

In step 206, a logo in the TV screen image is recognized based on a result of matching respective standard logos with the corresponding matching areas.

In summary, in the method for recognizing the logo provided by the present embodiment, after obtaining the TV screen image, the area corresponding to the position information of the standard logo is selected from the TV screen image according to the position information as the matching area of the standard logo for each pre-stored standard logo, and then the logo in the TV screen image is recognized based on the result of matching respective standard logos with the corresponding matching areas, such implementation reduces the size of the matching area to be the same as that of the standard logo, thereby solving the problem of low speed for logo recognition due to that the selected matching area from the TV screen image is large in the related art, and achieving the effects of reducing the matching area and improving the speed for logo recognition.

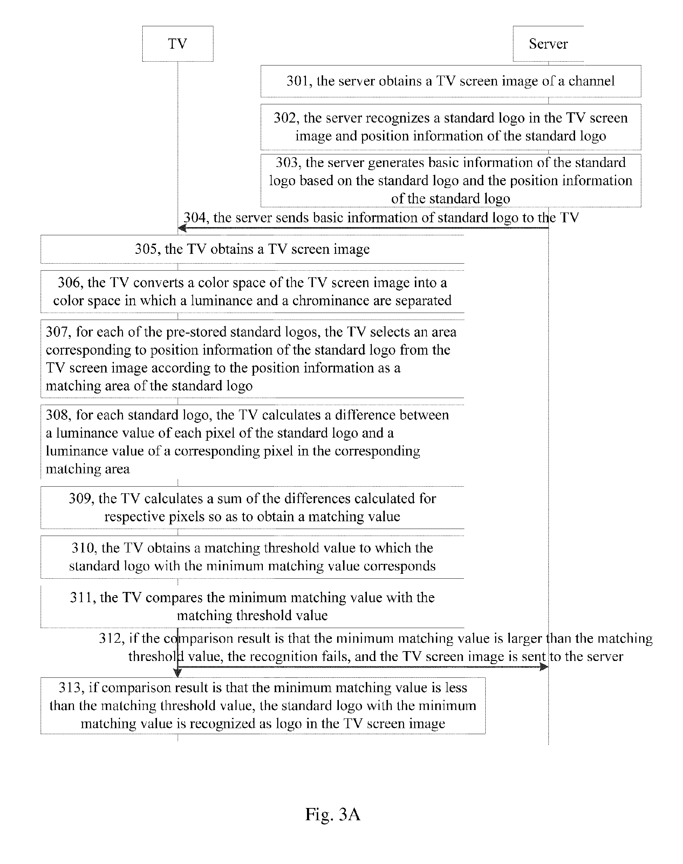

Referring to Fig. 3A, which illustrates an exemplary method flow chart of a method for recognizing a logo provided by another embodiment of the present disclosure, the method for recognizing a logo is applied in the implementation environment shown in Fig. 1. The method for recognizing a logo may include the following steps.

In step 301, the server obtains a TV screen image of a channel.

The server may obtain a TV screen image of a channel by two ways, one is obtaining the TV screen image of the channel by itself from Internet or a TV service provider, the other is receiving the TV screen image from TV if the TV cannot recognize the logo in the TV screen image.

In step 302, the server recognizes a standard logo in the TV screen image and position information of the standard logo.

The server recognizes a standard logo in the TV screen image and position information of the standard logo according to a control instruction input by the technician and the pre-stored standard logos. The standard logos pre-stored in the server may be obtained by downloading the standard logos from Internet in advance, classifying the standard logos and determining the size of each standard logo by the technician, and then storing them in the server.

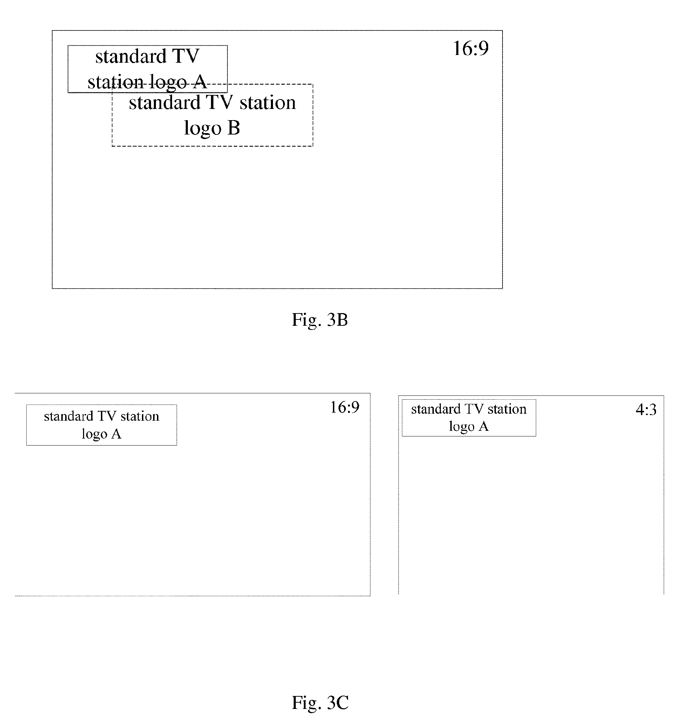

The position information of the standard logo is the position of the standard logo in the TV screen image. The standard logos of different channels have different positions in the TV screen with the same size and the same aspect ratio. As shown in Fig. 3B, the position of the standard logo A is slightly upper left than the position of the standard logo B. In addition, the same standard logo has different positions in the TV screens with different sizes or different aspect ratios. As shown in Fig. 3C, the position of the standard logo A in the 16:9 TV screen is different from that in the 4:3 TV screen.

Specifically, the step includes the following sub-steps.

First, a coordinate system is established.

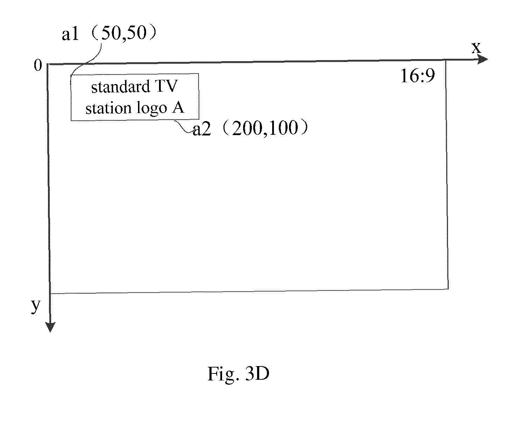

As shown in Fig. 3D, a coordinate system is established by taking an upper-left corner of the TV screen as the origin of coordinate, and taking the adjacent two sides of the TV screen as the coordinate axis, wherein a side length of the pixel is taken as a unit length.

Second, position information of respective standard logos is read from the coordinate system.

As shown in Fig. 3D, two vertices, i.e., an upper-left corner and a lower-right corner of the standard logo are selected as two feature points, assuming that the coordinate of the feature point al at the upper-left corner is (50, 50), the coordinate of the feature point a2 at the lower-right corner is (200, 100), the coordinates of the feature points a1 and a2 are read and stored as the position information.

Certainly, two vertices, i.e., a lower-left corner and an upper-right corner of the standard logo A may also be selected as two feature points, or four vertices, i.e., the upper-left, lower-left, upper-right and lower-right corners of the standard logo A may be selected as four feature points. In addition, the position information can also be represented by selecting a vertex of upper-left of the standard logo A and the values of length and width of the standard logo A. In short, there are a variety of representations for the position information, as long as it can represent the specific position of the standard logo in the TV screen.

In step 303, the server generates basic information of the standard logo based on the standard logo and the position information of the standard logo.

The basic information of each standard logo includes the standard logo and the position information of the standard logo, and there is a correspondence between the standard logo and the position information of the standard logo. In respective embodiments of the present disclosure, the standard logo refers to a logo graphic.

In step 304, the server sends the basic information of the standard logo to the TV.

In case of being networked, the TV may download the basic information of the standard logo from the server, and store the downloaded basic information of the standard logo into a local logo database.

Correspondingly, the TV receives the basic information of the standard logo sent by the server.

In step 305, the TV obtains a TV screen image.

When the user searches channels or changes channel, the TV automatically intercepts the TV screen image of the currently broadcasted channel. There are many ways to get the TV screen image, such as directly acquiring TV signals broadcasted by the TV through a third-party application or some scripts, then intercepting the screen at a certain moment among a series of consecutive screens formed by the TV signals.

In step 306, the TV converts a color space of the TV screen image into a color space in which a luminance and a chrominance are separated.

Typically, the color space of the original TV screen image is RGB (the color space represented by a tricolor model of a red, green, and blue). In order to eliminate the influence of mixing the luminance and chrominance, the TV screen image needs to be converted from RGB color space to the color space in which a luminance and a chrominance are separated. In the TV applications, YUV color space can be used generally, wherein, Y is a luminance signal, and U and V are chrominance signals. The YUV color space is adopted, because its luminance signal Y and chrominance signals U, V are separated. In the method for recognizing the logo provided by the present embodiment, the logo recognition is achieved by calculating and contrasting the magnitudes of the luminance signal Y, thus the recognition accuracy is high. The magnitude of the luminance signal Y is between 0 and 255, wherein Y value of black color is 0, and Y value of white color is 255.

In step 307, for each of the pre-stored standard logos, the TV selects an area corresponding to position information of the standard logo from the TV screen image according to the position information as a matching area of the standard logo.

The present embodiment is exemplified by using an example in which the position information of the same standard logo pre-stored by the TV is only one. Specifically, assuming that the position information of the standard logo A is (50, 50) and (200, 100), the point having a coordinate (50, 50) in the TV screen image is selected as an upper-left corner vertex of the matching area of the standard logo A, and the point having a coordinate (200, 100) in the TV screen image is selected as a lower-right corner vertex of the matching area of the standard logo A, and a rectangular area constituted by the upper-left corner vertex and the lower-right corner vertex is used as the matching area of the standard logo A. Assuming that the position information of a standard logo B is (80, 65) and (230, 115), the point having a coordinate (80, 65) in the TV screen image is selected as an upper-left corner vertex of the matching area of the standard logo B, and the point having a coordinate (230, 115) in the TV screen image is selected as a lower-right corner vertex of the matching area of the standard logo B, and a rectangular area constituted by the upper-left corner vertex and the lower-right corner vertex is used as the matching area of the standard logo B.

Further, when the position information of the same standard logo is more than one, each of the position information corresponds to different screen aspect ratios. As described in the above step 302, the same standard logo has different positions in the TV screens with different sizes or different aspect ratios. Therefore, when there is more than one position information for the same standard logo pre-stored in the TV, the TV needs to obtain the screen aspect ratio of the TV screen image, then select an area corresponding to the position information of the standard logo corresponding to the screen aspect ratio from the TV screen image according to the position information as a matching area of the standard logo.

In step 308, for each standard logo, the TV calculates a difference between a luminance value of each pixel of the standard logo and a luminance value of a corresponding pixel in the corresponding matching area.

Before performing the step 308, the TV also needs to convert the color space of the standard logo downloaded from the server into the color space in which a luminance and a chrominance are separated. If in the step 306, the color space of the TV screen image is converted into the YUV color space, it is also needed to convert the color space of each standard logo into the YUV color space. Of course, in order to reduce the calculation amount at the TV side and improve the recognition speed, the step of converting the color space of each standard logo into the color space in which a luminance and a chrominance are separated is generally executed by the server. In this case, the TV may directly download the converted respective standard logos from the server.

For each standard logo, the TV calculates a difference between a luminance value of each pixel of the standard logo and a luminance value of a corresponding pixel in the corresponding matching area. For example, the luminance value of a certain pixel of the standard logo A is 86, and the luminance value of the corresponding pixel in the corresponding matching area of the standard logo A is 85, then the difference there between is 1. Generally, the difference is an absolute value of the value obtained by subtracting one luminance value from the other luminance value.

Further, in order to reduce the calculation amount and improve the recognition accuracy, this step may include the following sub-steps.

First, for each pixel in the standard logo, the TV detects whether a luminance value of the pixel is 0.

Since the background of the standard logo is generally set to be black when selecting and processing each standard logo, the luminance value of the pixel within the black background of the standard logo is 0. Before calculating the difference between the luminance value of the standard logo and the luminance value of corresponding pixel in the corresponding matching area, whether the luminance value of the pixel is 0 may be detected; and if the luminance value of the pixel is 0, the calculation is not performed. The calculation is only performed for the portion in which the luminance value of the pixel is not 0, i.e., the portion in which the background is not black.

In addition to reducing the calculation amount and improving the recognition speed, this step can improve the recognition accuracy. Because of noise points, the luminance values between the same pixel in the standard logo and the TV screen image are different, and the selected pixels to be calculated is as few as possible, such that the influence of the error caused by the noise points can be reduced and the recognition accuracy can be improved.

Second, if the luminance value of the pixel is not 0, the TV calculates the difference between the luminance value of the pixel and the luminance value of corresponding pixel in the corresponding matching area.

This embodiment only performs calculation on the portion of the standard logo in which the luminance values of the pixels is not 0, i.e., the portion in which the background is not black.

In step 309, the TV calculates a sum of the differences calculated for respective pixels so as to obtain a matching value.

Because the position information of the standard logo A is (50, 50) and (200, 100), and the unit length of the coordinate is the side length of the pixel, the standard logo A has (200-50) $\times$ (100-50) = 7500 pixels. In the case that there is no black pixel in the standard logo A, the matching value is obtained by summing the differences of the luminance values obtained by calculating for 7500 pixels, and it is assumed that the calculated matching value of the standard logo A is 30. Further, if there are black pixels in the standard logo A, it is necessary to remove such black pixels.

In step 310, the TV obtains a matching threshold value to which the standard logo with the minimum matching value corresponds.

The smaller the matching value of the standard logo is, the smaller the difference between the luminance value of the standard logo and the luminance value of the matching area is, and the higher the similarity between the standard logo and the logo in the TV screen image is. Therefore, the standard logo with the minimum matching value is most likely the logo in the TV screen image.

However, the standard logo with the minimum matching value is not inevitably the logo in the TV screen image. If there is a new channel, and the TV does not pre-store the standard logo of the new channel, then it is inappropriate to select the standard logo with the minimum matching value as the logo of the new channel. In this regard, this step may include the following sub-steps.

The server presets the matching threshold value for each standard logo, and the matching threshold value is usually 50-70. The same matching threshold value may be set for all the standard logos, such as 60. However, in order to improve the accuracy of logo recognition, different matching threshold values may be set for different standard logos. The larger the area of the standard logo is, the greater the influence by the noise points is, and thereby the larger the calculated matching values is. Conversely, the smaller the area of the standard logo is, the less the influence by the noise points is, and thereby the smaller the calculated matching values is. Therefore, different matching threshold values may be set for different standard logos based on the size of the area of the standard logo, and the matching threshold value is positively correlated with the size of the area of the standard logo.

To further validate whether the standard logo with the minimum matching value is the logo in the TV screen image, the TV obtains the matching threshold value to which the standard logo with the minimum matching value corresponds. In addition to the standard logo and the position information of the standard logo, the basic information of the standard logo downloaded from the server may further include the matching threshold value of the standard logo.

In step 311, the TV compares the minimum matching value with the matching threshold value.

After obtaining the matching threshold value to which the standard logo with the minimum matching value corresponds, the TV compares the minimum matching value with the matching threshold value.

In step 312, if the comparison result is that the minimum matching value is larger than the matching threshold value, the recognition fails, and the TV screen image is sent to the server.

When the minimum matching value is larger than the matching threshold value of the standard logo to which this matching value corresponds, it indicates that the similarity between the matching area and the standard logo to which the minimum matching value corresponds is not enough, thereby the standard logo with the minimum matching value is probably not the logo of the currently broadcasted channel. At this point, it is considered that a new channel is appeared, i.e., the TV does not pre-store the standard logo of the new channel. The TV sends the TV screen image to the server, then the server recognizes the standard logo in the TV screen image and the position information of the standard logo, generates the basis information of the standard logo and send it to the TV by the above steps 301-304. Afterwards, the TV performs the above step 305 and the subsequent steps to re-recognize the logo.

In step 313, if the comparison result is that the minimum matching value is less than the matching threshold value, the standard logo with the minimum matching value is recognized as the logo in the TV screen image.

When the minimum matching value is less than the matching threshold value of the standard logo to which this matching value corresponds, it indicates that the similarity between the matching area and the standard logo to which the minimum matching value corresponds is high, thereby the standard logo with the minimum matching value is considered as the logo of the currently broadcasted channel, and the standard logo with the minimum matching value is recognized to be the logo in the TV screen image.

Further, after recognizing the logo in the TV screen image, the channel name of the currently broadcasted channel may be obtained according to the corresponding relationship between the logo and the channel name.

In summary, in the method for recognizing the logo provided by the present embodiment, after obtaining the TV screen image, the area corresponding to the position information of the standard logo is selected from the TV screen image according to the position information as the matching area of the standard logo for each pre-stored standard logo, and then the logo in the TV screen image is recognized based on the result of matching respective standard logos with the corresponding matching areas, such implementation reduces the size of the matching area to be the same as that of the standard logo, thereby solving the problem of low speed for logo recognition due to that the selected matching area from the TV screen image is large in the related art, and achieving the effects of reducing the matching area and improving the speed for logo recognition.

Also, in the method for recognizing the logo provided by the present embodiment, the color space in which a luminance and a chrominance are separated, such as YUV color space, is applied to calculate the difference between the luminance values of the matching area and the standard logo, so as to realize the logo recognition, such algorithm is simple and has a high accuracy.

Additionally, in the method for recognizing the logo provided by the present embodiment, whether the luminance value of the pixel is 0 is detected, then only the difference between the luminance value of each pixel in the standard logo in which the background is not 0 and the luminance value of corresponding pixel in the corresponding matching area is calculated, which reduces the calculation amount and improves the recognition accuracy.

Furthermore, in the method for recognizing the logo provided by the present embodiment, a matching threshold value is set for each standard logo, after obtaining the matching value of each standard logo by calculation, the minimum matching value is compared with the matching threshold value, and when the comparison result is that the minimum matching value is larger than the matching threshold value, the TV screen image is sent to the server and then the server returns basic information of a new standard logo, which solves the problem of being unable to recognizing new logo in the related art, and achieves the effect of being capable of recognizing new logos.

It should be noted that, since many standard logos have a translucent portion, the finally obtained matching value is relatively large when calculating the luminance value of this translucent portion, due to that the matching area is affected by the background of the TV screen greatly, which will cause errors. In this regard, the process of the present disclosure is to only maintain the opaque portions of the standard logo for each standard logo stored in the server, so as to improve recognition accuracy.

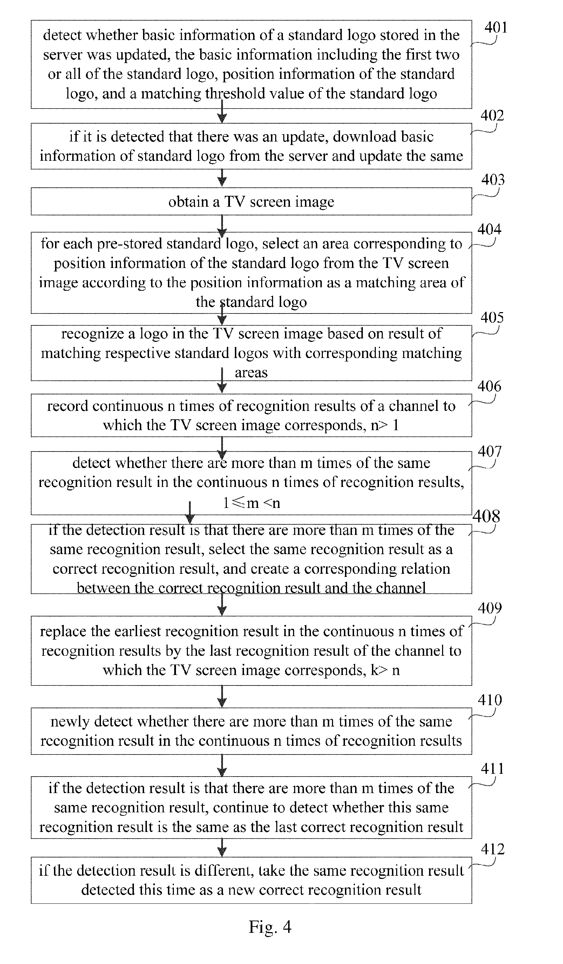

Refer to Fig. 4, which illustrates an exemplary method flow chart of a method for recognizing a logo provided by another embodiment of the present disclosure, the method for recognizing a logo is applied in the TV side of the implementation environment shown in Fig. 1. The method for recognizing a logo may include the following steps.

In step 401, whether basic information of a standard logo stored in the server was updated is detected, the basic information including the first two or all of the standard logo, position information of the standard logo, and a matching threshold value of the standard logo.

In the case that there is a network connection between the TV and the server, every time the user turns on the TV, the TV logins the server to detect whether the basic information of the standard logo stored in the server was updated. The basic information includes the first two or all of the standard logo, the position information of the standard logo, and a matching threshold value of the standard logo. The embodiment shown in Fig. 3 has introduced the role and effect of setting the matching threshold value for each standard logo, which is not repeated in this embodiment. When it is needed to recognize a new logo, the basic information of the standard logo can be downloaded from the server. The basic information includes the standard logo and the position information of the standard logo, and the basic information may also include one or more information of the matching threshold value of the standard logo, and the channel name and channel network ID corresponding to the standard logo, etc.

In step 402, if it is detected that there was an update, the basic information is downloaded from the server and is updated.

Specifically, this step may include the following sub-steps.

First, local region information is sent to the server.

The numbers and kinds of the TV channels which could be received by different regions are different, for example, in Jiangsu Province, TV signals of 30 TV channels can be received, while in Beijing, TV signals of 50 TV channels can be received. Therefore, in order to increase the cache space in the TV while increasing the speed of the logo recognition, only the basic information of the standard logos corresponding to the TV channels, which could be received at the local region, is needed to be downloaded.

Second, the basic information of at least one standard logo fed back by the server based on the local region information is received.

At the server side, the stored basic information of the standard logo may be classified based on different region information in advance, and the basic information of the standard logo of the region at which the TV is located is fed back to the TV.

In step 403, a TV screen image is obtained.

The TV obtains the TV screen image when the user searches channels or changes the channel.

In step 404, for each pre-stored standard logo, an area corresponding to position information of the standard logo is selected from the TV screen image according to the position information as a matching area of the standard logo.

In step 405, a logo in the TV screen image is recognized based on a result of matching respective standard logos with the corresponding matching areas.

The above step 403 to step 405 are the whole or a part of step 305 to step 313 in the embodiment shown in Fig. 3, which have been discussed and described in detail in the embodiment shown in Fig 3, so the details of step 403 to step 405 are omitted herein.

In step 406, continuous n times of recognition results of a channel to which the TV screen image corresponds are recorded, n> 1.

A local cache for recording the recently continuous n times of recognition results of each channel may be added in the TV, and n is assumed to be equal to 10. Further, in order to explain more clearly, the channel network ID is used to represent the recognition result. Similar to the standard logo, different channels correspond to different standard logos, correspond to different channel names, and correspond to different channel network IDs. After recognizing the logo in the TV screen image, the recognition result can be represented by the channel network ID. Thus, information recorded in the local cache may be as shown in Table-1 below.

Table-1

| Channel | Recognition result (represented by the channel network ID) | | | | | | | | | |
|---|---|---|---|---|---|---|---|---|---|---|
| | 1 | 2 | 3 | 4 | 5 | 6 | 7 | 8 | 9 | 10 |
| 0 | 5 | 5 | 5 | 5 | 5 | 5 | 6 | 5 | 5 | 5 |
| 1 | 7 | 8 | 8 | 8 | 8 | 8 | 8 | 8 | 8 | 8 |
| 2 | 22 | 22 | 22 | 22 | 22 | 4 | 22 | 22 | 13 | 22 |
| 3 | 54 | 54 | 11 | 54 | 54 | 54 | 54 | 54 | 54 | 54 |
| ... | ... | ... | ... | ... | ... | ... | ... | ... | ... | ... |

In step 407, whether there are more than m times of the same recognition result in the continuous n times of recognition results is detected, $1 \leq m < n$.

During implementing the present disclosure, an experiment is performed by using 30 channels. It is found that, when recognizing any TV screen image by the above step 403 to step 405, i.e., recognizing logo for any one channel once, the recognition accuracy is about 80 %. If it is desired to improve the recognition accuracy to above 99.99%, at least seven times of repeated recognitions should be performed, and the calculating equation is: Accuracy

$$P = 1 - (1-80\%) \char94 7 = 99.99\%.$$

In this embodiment, n = 10 and m = 7, in this way, the recognition accuracy can reach above 99.99 %.

In step 408, if the detection result is that there are more than m times of the same recognition result, the same recognition result is selected as a correct recognition result, and a corresponding relation between the correct recognition result and the channel is created.

In the case that n = 10 and m = 7, when starting to recognize a logo, whether there are more than 7 times of the same recognition result in the continuous 10 times of recognition results is detected, if the detection result is that there are more than 7 times of the same recognition result, the same recognition result is selected as the correct recognition result. Meanwhile, a corresponding relation between the correct recognition result and the channel is created.

As shown in the above Table-1, a channel network ID corresponding to Channel 0 is 5; a channel network ID corresponding to Channel 1 is 8; a channel network ID corresponding to Channel 2 is 22; a channel network ID corresponding to Channel 54 is 11; and the like. The recognition result is represented by the channel network ID.

Specifically, when there are not more than m times of the same recognition result in the continuous n times of recognition results, the corresponding relation between the correct recognition result and the channel is not created. The corresponding relation between the correct recognition result and the channel is created until there are more than m times of the same recognition result in the continuous n times of recognition results after performing the recognition several times. For example, the channel network IDs of Channel 4 in the continuous 10 times of recognition results are 6, 15, 15, 6, 15, 15, 15, 22, 15 and 15, respectively, there are not more than 7 times of the same recognition result, there are only a maximum of 6 times of the same recognition result, thus the corresponding relation between the network channel ID 15 and Channel 4 is not created, and the following step 409 to step 412 are continued to be performed.

In step 409, the earliest recognition result in the continuous n times of recognition results is replaced by the last recognition result of the channel to which the TV screen image corresponds.

It is assumed that after recognizing logo of Channel 4 for the eleventh times, the channel network ID in the recognition results is 15, the earliest recognition result in the continuous 10 times of recognition results is replaced by 15, i.e., the recognition result that the channel network ID is 6 is replaced by 15, such that the new, most recently continuous 10 times of recognition results are 15, 15, 6, 15, 15, 15, 22, 15, 15 and 15, respectively. Whether the last recognition result is the same as the earliest recognition result in the continuous 10 times of recognition results or not, the replacement operation in this step is executed.

In step 410, whether there are more than m times of the same recognition result in the continuous n times of recognition results is newly detected.

Whether there are not more than 7 times of the same recognition result in the continuous 10 times of recognition results is newly detected. When it is found that there are more than 7 times of the same recognition result, the channel network ID is 15.

In step 411, if the detection result is that there are more than m times of the same recognition result, whether this same recognition result is the same as the last correct recognition result is continued to be detected.

Generally, during replacing the earliest recognition result in the continuous n times of recognition results by the last recognition result consecutively, there are always more than m times of the same recognition result for a channel, and the more than m times of the same recognition result is the correct recognition result of this channel.

However, if there are more than m times of the same recognition result for a certain channel previously, i.e., this channel already has the correct recognition result, after several subsequent recognitions, the subsequent recognition results are different from the correct recognition result, and the previous recognition results are replaced by the subsequent recognition results consecutively, when there are more than m times of the same recognition result again, whether the more than m times of the same recognition result appeared again is the same as the last correct recognition result is detected.

In step 412, if the detection result is different, the same recognition result detected this time is taken as a new correct recognition result.

If the detection result is different, the same recognition result detected this time is taken as a new correct recognition result, instead of the previous correct recognition result of the channel.

In summary, in the method for recognizing the logo provided by the present embodiment, after obtaining the TV screen image, the area corresponding to the position information of the standard logo is selected from the TV screen image according to the position information as the matching area of the standard logo for each pre-stored standard logo, and then the logo in the TV screen image is recognized based on the result of matching respective standard logos with the corresponding matching areas, such implementation reduces the size of the matching area to be the same as that of the standard logo, thereby solving the problem of low speed for logo recognition due to that the selected matching area from the TV screen image is large in the related art, and achieving the effects of reducing the matching area and improving the speed for logo recognition.

In the method for recognizing the logo provided by the present embodiment, continuous n times of the recognition results of the channel to which the TV screen image corresponds are recorded, whether there are more than m times of the same recognition result in the continuous n times of recognition results is detected, the more than m times of the same recognition result is selected as the correct recognition result, thereby avoiding the error which may be occurred in one time of recognition, and greatly improving the recognition accuracy.

The following are the device embodiments of the present disclosure, which are configured to perform the method embodiments in the present disclosure. For details of the device embodiments of the present disclosure which are not disclosed, please refer to the method embodiments of the present disclosure.

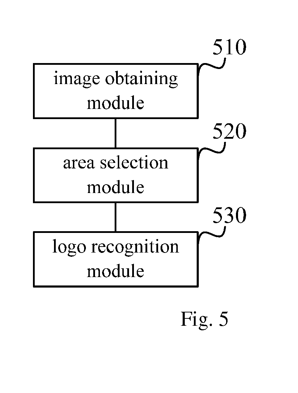

Referring to Fig. 5, which is an exemplary block diagram of a device for recognizing a logo provided by one embodiment of the present disclosure, the device for recognizing a logo may constitute all or a part of the TV by software, hardware or a combination thereof. The device for recognizing a logo may include an image obtaining module 510, an area selection module 520, and a logo recognition module 530.

The image obtaining module 510 is configured to obtain a TV screen image.

The area selection module 520 is configured to, for each pre-stored standard logo, select an area corresponding to position information of the standard logo from the TV screen image according to the position information as a matching area of the standard logo, the position information is a position of the standard logo in the TV screen.

The logo recognition module 530 is configured to recognize a logo in the TV screen image based on a result of matching respective standard logos with the corresponding matching areas.

In summary, in the device for recognizing the logo provided by the present embodiment, after obtaining the TV screen image, the area corresponding to the position information of the standard logo is selected from the TV screen image according to the position information as the matching area of the standard logo for each pre-stored standard logo, and then the logo in the TV screen image is recognized based on the result of matching respective standard logos with the corresponding matching areas, such implementation reduces the size of the matching area to be the same as that of the standard logo, thereby solving the problem of low speed for logo recognition due to that the selected matching area from the TV screen image is large in the related art, and achieving the effects of reducing the matching area and improving the speed for logo recognition.

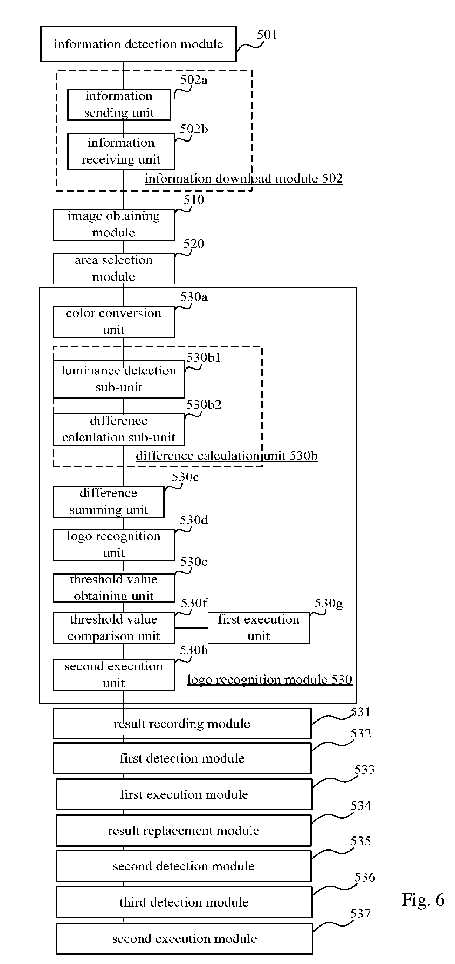

Referring to Fig. 6, which is an exemplary block diagram of a device for recognizing a logo provided by another embodiment of the present disclosure, the device for recognizing a logo may constitute all or a part of the TV by software, hardware or a combination thereof. The device for recognizing a logo may include an information detection module 501, an information download module 502, an image obtaining module 510, an area selection module 520, and a logo recognition module 530.

The information detection module 501 is configured to detect whether basic information of a standard logo stored in a server was updated, the basic information including the first two or all of the standard logo, the position information of the standard logo, and a matching threshold value of the standard logo.

The information download module 502 is configured to, if it is detected that there was an update, download the basic information from the server and update it.

Specifically, the information download module 502 includes an information sending unit 502a and an information receiving unit 502b.

The information sending unit 502a is configured to send local region information to the server.

The information receiving unit 502b is configured to receive the basic information of at least one standard logo fed back by the server based on the local region information.

The image obtaining module 510 is configured to obtain a TV screen image.

The area selection module 520 is configured to, for each pre-stored standard logo, selecting an area corresponding to position information of the standard logo from the TV screen image according to the position information as a matching area of the standard logo, the position information is a position of the standard logo in the TV screen.

The logo recognition module 530 is configured to recognize a logo in the TV screen image based on a result of matching respective standard logos with the corresponding matching areas.

In particular, the logo recognition module 530 may include: a color conversion unit 530a, a difference calculation unit 530b, a difference summing unit 530c, and a logo recognition unit 530d.

The color conversion unit 530a is configured to convert a color space of the TV screen image into a color space in which a luminance and a chrominance are separated.

The difference calculation unit 530b is configured to, for each standard logo, calculate a difference between a luminance value of each pixel of the standard logo and a luminance value of a corresponding pixel in the corresponding matching area.

Specifically, the difference calculation unit 530b includes: a luminance detection sub-unit 530b1 and a difference calculation sub-unit 530b2.

The luminance detection sub-unit 530b1 is configured to, for each pixel in the standard logo, detect whether a luminance value of the pixel is 0.

The difference calculation sub-unit 530b2 is configured to, if the luminance value of the pixel is not 0, calculate the difference between the luminance value of the pixel and the luminance value of corresponding pixel in the corresponding matching area.

The difference summing unit 530c is configured to calculate a sum of the differences calculated for respective pixels so as to obtain a matching value.

The logo recognition unit 530d is configured to recognize a standard logo with the minimum matching value as the logo in the TV screen image.

The logo recognition module 530 may further include: a threshold value obtaining unit 530e, a threshold value comparison unit 530f, a first execution unit 530g, and a second execution unit 530h.

The threshold value obtaining unit 530e is configured to obtain a matching threshold value to which the standard logo with the minimum matching value corresponds, and the matching threshold value is positively correlated with a size of an area of the standard logo.

The threshold value comparison unit 530f is configured to compare the minimum matching value with the matching threshold value.

The first execution unit 530g is configured to, if the comparison result is that the minimum matching value is larger than the matching threshold value, which indicates the recognition fails, send the TV screen image to the server.

The second execution unit 530h is configured to, if the comparison result is that the minimum matching value is less than the matching threshold value, recognize the standard logo with the minimum matching value as the logo in the TV screen image.

A result recording module 531 is configured to record the continuous n times of recognition results of a channel to which the TV screen image corresponds, n> 1.

A first detection module 532 is configured to detect whether there are more than m times of the same recognition result in the continuous n times of recognition results, 1 ≤m <n.

A first execution module 533 is configured to, if the detection result is that there are more than m times of the same recognition result, select the same recognition result as a correct recognition result, and create a corresponding relation between the correct recognition result and the channel.

A result replacement module 534 is configured to replace the earliest recognition result in the continuous n times of recognition results by the last recognition result of the channel to which the TV screen image corresponds.

A second detection module 535 is configured to newly detect whether there are more than m times of the same recognition result in the continuous n times of recognition results.

A third detection module 536 is configured to, if the detection result is that there are more than m times of the same recognition result, continue to detect whether this same recognition result is the same as the last correct recognition result.

A second execution module 537 is configured to, if the detection result is different, take the same recognition result detected this time as a new correct recognition result.

In summary, in the device for recognizing the logo provided by the present embodiment, after obtaining the TV screen image, the area corresponding to the position information of the standard logo is selected from the TV screen image according to the position information as the matching area of the standard logo for each pre-stored standard logo, and then the logo in the TV screen image is recognized based on the result of matching respective standard logos with the corresponding matching areas, such implementation reduces the size of the matching area to be the same as that of the standard logo, thereby solving the problem of low speed for logo recognition due to that the selected matching area from the TV screen image is large in the related art, and achieving the effects of reducing the matching area and improving the speed for logo recognition.

Also, in the device for recognizing the logo provided by the present embodiment, the color space in which a luminance and a chrominance are separated, such as YUV color space, is applied to calculate the difference between the luminance values of the matching area and the standard logo, so as to realize the logo recognition, such algorithm is simple and has a high accuracy.

Additionally, in the device for recognizing the logo provided by the present embodiment, whether the luminance value of the pixel is 0 is detected, then only the difference between the luminance value of each pixel in the standard logo in which the background is not 0 and the luminance value of corresponding pixel in the corresponding matching area is calculated, which reduces the calculation amount and improves the recognition accuracy.

Furthermore, in the device for recognizing the logo provided by the present embodiment, a matching threshold value is set for each standard logo, after obtaining the matching value of each standard logo by calculation, the minimum matching value is compared with the matching threshold value, and when the comparison result is that the minimum matching value is larger than the matching threshold value, the TV screen image is sent to the server and then the server returns basic information of a new standard logo, which solves the problem of being unable to recognizing new logo in the related art, and achieves the effect of being capable of recognizing new logos.

Moreover, in the device for recognizing the logo provided by the present embodiment, continuous n times of the recognition results of the channel to which the TV screen image corresponds are recorded, whether there are more than m times of the same recognition result in the continuous n times of recognition results is detected, the more than m times of the same recognition result is selected as the correct recognition result, thereby avoiding the error which may be occurred in one time of recognition, and greatly improving the recognition accuracy.

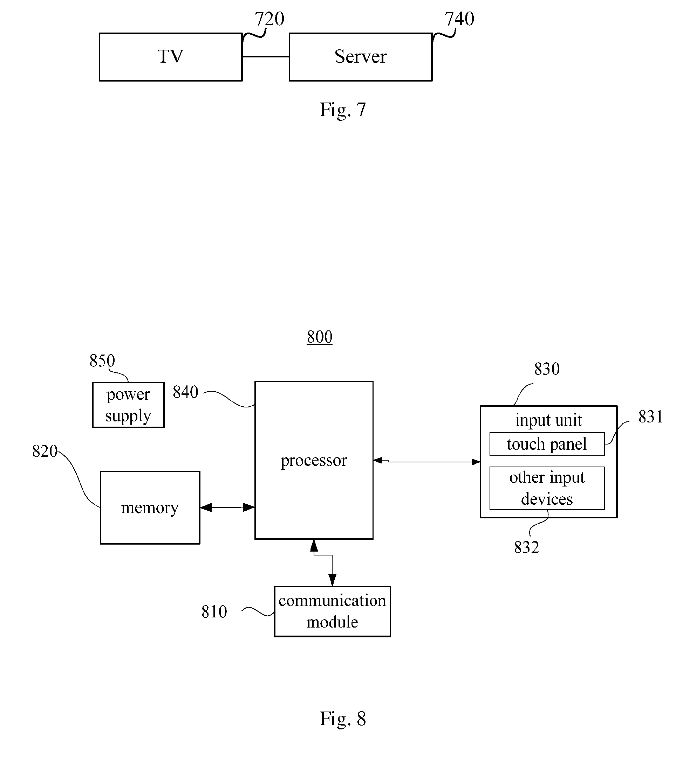

Referring to Fig. 7, which is an exemplary block diagram of a system for recognizing a logo provided by one embodiment of the present disclosure, the system for recognizing a logo includes a TV 720 and a server 740.

The TV 720 includes a device for recognizing a logo shown in Fig. 5 or Fig. 6, the device for recognizing a logo may constitute all or a part of the TV by software, hardware or a combination thereof.

The TV 720 and the server 740 are connected via a wired network or a wireless network.

The server 740 provides basic information of standard logos to the TV 720.

In summary, in the system for recognizing the logo provided by the present embodiment, after obtaining the TV screen image, the area corresponding to the position information of the standard logo is selected from the TV screen image according to the position information as the matching area of the standard logo for each pre-stored standard logo, and then the logo in the TV screen image is recognized based on the result of matching respective standard logos with the corresponding matching areas, such implementation reduces the size of the matching area to be the same as that of the standard logo, thereby solving the problem of low speed for logo recognition due to that the selected matching area from the TV screen image is large in the related art, and achieving the effects of reducing the matching area and improving the speed for logo recognition.

It should be explained that the device for recognizing a logo provided by the above embodiments are only exemplified to be divided as the above respective functional modules when recognizing a logo. In actual applications, the above functions may be distributed to be achieved by different functional modules according to requirements, i.e., the interior structure of the devices may be divided into different functional modules for achieving all or a part of the above described functions. In addition, the device for recognizing a logo provided by the above embodiments and the method embodiments of the method for recognizing a logo belong to the same concept, and the detailed implementing procedures of the device for recognizing a logo may be referred to the method embodiments, which will not be repeated herein.

Another embodiment of the present disclosure provides a TV which may include: one or more processors; a memory; and one or more modules stored in the memory and being configured to be executed by the one or more processors, the one or more modules having the following functions: obtaining a TV screen image; for each pre-stored standard TV station logo, selecting an area corresponding to position information of the standard TV station logo from the TV screen image according to the position information as a matching area of the standard TV station logo, the position information being a position of the standard TV station logo in the TV screen; and recognizing a TV station logo in the TV screen image based on a result of matching respective standard TV station logos with the corresponding matching areas.

Yet another embodiment of the present disclosure provides a program product having stored therein instructions that, when executed by one or more processors of a TV, cause the TV to perform: obtaining a TV screen image; for each pre-stored standard TV station logo, selecting an area corresponding to position information of the standard TV station logo from the TV screen image according to the position information as a matching area of the standard TV station logo, the position information being a position of the standard TV station logo in the TV screen; and recognizing the TV station logo in the TV screen image based on a result of matching respective standard TV station logos with the corresponding matching areas. Referring to Fig. 8, which illustrates an exemplary structural diagram of the TV involved in respective embodiments of the present disclosure, the TV may implement the method for recognizing a logo provided by the above embodiments. The TV in the embodiments of the present disclosure may include one or more of the following constituting parts: a processor for executing computer program instructions to accomplish various procedures and methods, a Random Access Memory (RAM) and a Read-Only Memory (RAM) for storing information and program instructions, a memory for storing data and information, an I/O device, an interface, an antenna, and the like.

The TV 800 may include a communication module 810, a memory 820 including one or more computer-readable storage mediums, an input unit 830, a processor 840 including one or more processing cores, a power supply 850 and the like.

The communication module 810 is configured to receive and transmit signals during information receipt and transmission or during a call. Specifically, the communication unit 810 may send the received information to the one or more processors 840 for processing. During actual implementation, the communication module 810 may be a RF circuit, a wireless connection module or a wired connection module. Generally, the RF circuit 810 includes, but is not limited to an antenna, at least one amplifier, a tuner, one or more oscillators, a subscriber identity module (SIM) card, a transceiver, a coupler, a LNA (Low Noise Amplifier), a duplexer, etc. Additionally, the RF circuit 810 may also communicate with network and other devices via wireless communication. The wireless connection module may be a WIFI module or Bluetooth module, which may assist the user to transmit and receive information sent from other TVs. The wired connection module is a module which may be connected with other TVs via other connection wires, such as network cable, so as to transmit and receive information.

The memory 820 may be configured to store software programs and modules. The processor 840 performs various functional applications and data processing by executing the software programs and modules stored in the memory 820. The memory 820 may mainly include a program storage region and a data storage region, wherein the program storage region may store an operation system, an application program required by at least one function (such as an audio playing function, an image playback function) and the like; and the data storage region may store the data created according to the usage of the TV 800 (such as audio data, a phone book) and the like. In addition, the memory 820 may include a high-speed random access memory, and may also include a non-transitory memory, such as at least one disc storage device, flash device or other transitory solid-state storage device. Accordingly, the memory 820 may also include a memory controller for providing the processor 840 and the input unit 830 with an access to the memory 820.

The input unit 830 may be configured to receive the input digits or character information, and generate signal inputs of a keyboard, a mouse, a joystick, an optics or a trackball related to the user settings and function control. Particularly, the input unit 830 may include a touch sensitive surface 831 and other input devices 832. The touch sensitive surface 831, which is also referred to as a touch screen or a touch pad, can collect the user's touch operation thereon or thereabout (for example, the user performs operations on the touch sensitive surface 831 or near the touch sensitive surface 831 by using fingers, a stylus, or any suitable object or accessory), and drive the corresponding connected device according to the preset program. Optionally, the touch sensitive surface 831 may include two parts, i.e., a touch detection device and a touch controller, wherein the touch detection device detects a touch orientation of the user and signals caused by the touch operation, and transmits the signals to the touch controller; and the touch controller receives the touch information from the touch detection device, converts the touch information into a contact coordinate and transmits it to the processor 840, and the touch controller can also receive the instruction from the processor 840 and execute the instruction. Additionally, the touch sensitive surface 831 may be achieved by adopting various types, such as a resistive type, a capacitive type, an infrared ray type, and a surface acoustic wave type. Besides the touch sensitive surface 831, the input unit 830 may also include other input devices 832. Particularly, the other input devices 832 may include but not limited to one or more of a physical keyboard, a function key (such as a volume control key, a switch key), a trackball, a mouse and a joystick.

The processor 840 is a control center of the TV 800. The processor 840 connects respective parts of the entire mobile phone via various interfaces and wirings, and performs various functions of the TV 800 and processes data so as to wholly monitor the TV, by running or executing the software programs and/or modules within the memory 820 and calling the data stored in the memory 820. Optionally, the processor 840 may include one or more processing cores. Preferably, the processor 840 may integrate with the application processor and the modem processor, wherein the application processor mainly processes the operation system, the user interface, the application program, etc., and the modem processor mainly processes the wireless communication. It may be appreciated that the modem processor may not be integrated into the processor 840.

The TV 800 further includes a power supply 850 (such as a battery) for supplying power to respective components. Preferably, the power supply may be connected to the processor 840 logically via a power management system, so as to achieve the functions of a charge management, a discharge management and a power consumption management by the power management system. The power supply 850 may also include any components, such as one or more direct current or alternative current power supplies, recharging systems, power failure detection circuits, power converters or inverters, and power status indicators.

Although not shown in the drawing, the TV 800 may also include a camera, a Bluetooth module, and the like, which are not repeated herein. In the present embodiment, the TV further includes physical control keys within an area of the TV controllable by hand, a memory and one or more modules. The one or more modules are stored in the memory and configured to make the one or more processors execute the instructions at the TV side involved in the method for recognizing a logo provided by the embodiment shown in Fig. 2, Fig. 3A or Fig. 4 of the present disclosure.

In addition, typically, the electronic device described in the present disclosure may be various handheld TV devices, such as a mobile phone, and a personal digital assistant (PDA). Thereby, the protection scope of the present disclosure should not be restricted to any specific type of the electronic device.

Additionally, the method according to the present disclosure may be implemented as the computer program executed by CPU, and the computer program may be stored in the computer-readable storage medium. When the computer program is executed by the CPU, the above functions defined in the method of the present disclosure are performed.

Furthermore, the above steps in the method and the units in the system may also be realized by using the controller and the computer-readable storage medium which stores the computer program for causing the controller to achieve the above steps or unit functions.

Moreover, it should be understood that the computer-readable storage medium (such as the memory) described in the present disclosure may be a transitory or non-transitory memory, or a combination thereof. As an example and not restrictive, the non-transitory memory may include a read-only memory (ROM), a programmable ROM (PROM), an electrically programmable ROM (EPROM), an electrically erasable programmable ROM (EEPROM), or a flash memory. The transitory memory may include a random access memory (RAM) which can act as an external cache memory. As an example and not restrictive, RAM may be obtained in various forms, such as a synchronous RAM (DRAM), a dynamic RAM (DRAM), a synchronous DRAM (SDRAM), a double data rate SDRAM (DDR SDRAM), an enhanced SDRAM (ESDRAM), a synchronization link DRAM (SLDRAM), and a direct RambusRAM (DRRAM). The storage devices in the aspects of the present disclosure are intended to include, but not limited to, these and any other suitable types of memory.

The person skilled in the art should also understand that the various illustrative logical blocks, modules, circuits and algorithm steps described in combination with the contents disclosed herein may be implemented as an electronic hardware, computer software or a combination thereof. In order to clearly explain the interchangeability between the hardware and the software, a general description has been given in terms of the functions of various illustrative components, blocks, modules, circuits and steps. These functions are implemented as the software or implemented as the hardware depending on the particular applications and the design constraints imposed to the whole system.

The various illustrative logical blocks, modules and circuits described in combination with the contents disclosed herein may be realized or executed by the following components which are designed for executing the above functions: a general purpose processor, a digital signal processor (DSP), an application specific IC (ASIC), a field programmable gate array (FPGA), or other programmable logic devices, a discrete gate, or a transistor logic, a discrete hardware element or any combination thereof. The general purpose processor may be a microprocessor. Alternatively, the processor may be any conventional processor, controller, microcontroller or state machine. The processor may also be implemented as a combination of the computing devices, such as a combination of a DSP and a microprocessor, a plurality of microprocessors, one or more microprocessor combined with a DSP core, or any other such configurations.

The steps of the method or algorithm described in combination with the contents disclosed herein may be directly included in the hardware, in the software module executed by the processor, or in a combination thereof. The software module may reside in a RAM, a flash memory, a ROM, an EPROM, an EEPROM, a register, a hard disk, a removable disk, a CD-ROM, or any other storage mediums of any forms known in the art. The exemplary storage medium is coupled to the processor such that the processor can read information from the storage medium or write information into the storage medium. In an alternative solution, the storage medium may be integrated to the processor. The processor and the storage medium may reside in an ASIC. The ASIC may reside in a user terminal. In an alternative solution, the processor and the storage medium may reside in the user terminal as discrete components.

In one or more exemplary designs, the functions may be implemented in hardware, software, firmware, or any combination thereof. If the functions are implemented in software, the functions may be stored in the computer-readable storage medium or may be transmitted by the computer-readable medium as one or more instructions or codes. The computer-readable medium includes a computer storage medium and a communication medium, and the communication medium includes any medium assisting the transmission of the computer program from one place to another place. The storage medium may be any available medium which is able to be accessed by a general purpose or special purpose computer. As an example and not restrictive, the computer-readable medium may include a RAM, a ROM, an EEPROM, a CD-ROM or other optical disc storage devices, magnetic disc storage devices or other magnetic storage devices, or may be any other media which are used to carry or store the desired program codes in the form of instructions or data structures and can be accessed by a general purpose or special purpose computer or a general purpose or special purpose processor. Also, any linking may be properly referred to as the computer-readable medium. For example, if sending the software from a website, a server, or other remote sources by a coaxial cable, a fiber optic cable, a twisted pair, a digital subscriber line (DSL), or a wireless technology such as an infrared, a radio and a microwave technologies, the above coaxial cable, fiber optic cable, twisted pair, DSL, or wireless technology such as the infrared, the radio and the microwave technologies are included in the definition of the media. As used herein, the magnetic disc and the optical disc include a compact disc (CD), a laser disc, an optical disc, a digital versatile disc (DVD), a floppy disc and a blu-ray disc, wherein the magnetic disc usually reproduces data magnetically, while the optical disc reproduces data optically with lasers. The combinations of the above contents should also be included within the scope of the computer-readable medium.

The person skilled in the art can understand that the whole or part of the steps for achieving the above-described embodiments can be accomplished by hardware, or be accomplished by a program instructing relevant hardware, the program may be stored in a computer readable storage medium, and the above-mentioned storage medium may be a read-only memory, a magnetic disc or an optical disc, etc.

## Claims

1. A method for recognizing a TV station logo, **characterized in that**, the method comprises:

   obtaining a TV screen image (202, 305, 403);
   for each pre-stored standard TV station logo, selecting an area corresponding to position information of the standard TV station logo from the TV screen image according to the position information as a matching area of the standard TV station logo, the position information being a position of the standard TV station logo in the TV screen (204, 307, 404); and
   recognizing the TV station logo in the TV screen image based on a result of matching respective standard TV station logos with the corresponding matching areas (206, 405).

2. The method according to claim 1, wherein said recognizing the TV station logo in the TV screen image based on the result of matching respective standard TV station logos with the corresponding matching areas (206, 405) comprises:

   converting a color space of the TV screen image into a color space in which a luminance and a chrominance are separated (306);
   for each standard TV station logo, calculating a difference between a luminance value of each pixel in the standard TV station logo and a luminance value of a corresponding pixel in the corresponding matching area (308);
   calculating a sum of the differences calculated for respective pixels so as to obtain a matching value (309); and
   recognizing the standard TV station logo with the minimum matching value as the TV station logo in the TV screen image.

3. The method according to claim 2, wherein said calculating the difference between the luminance value of each pixel in the standard TV station logo and the luminance value of the corresponding pixel in the corresponding matching area (308) comprises:

for each pixel in the standard TV station logo, detecting whether the luminance value of the pixel is 0; and
if the luminance value of the pixel is not 0, calculating the difference between the luminance value of the pixel and the luminance value of corresponding pixel in the corresponding matching area.

4. The method according to claim 2, wherein the method further comprises:

obtaining a matching threshold value to which the standard TV station logo with the minimum matching value corresponds (310), the matching threshold value being positively correlated with a size of an area of the standard TV station logo;
comparing the minimum matching value with the matching threshold value (311);
if the comparison result is that the minimum matching value is larger than the matching threshold value, which indicates the recognition fails, sending the TV screen image to a server (312); and
if the comparison result is that the minimum matching value is less than the matching threshold value, recognizing the standard TV station logo with the minimum matching value as the TV station logo in the TV screen image (313).

5. The method according to any one of claims 1 to 4, wherein the method further comprises:

detecting whether basic information of the standard TV station logo stored in a server (740, 120) was updated, the basic information including the first two or all of the standard TV station logo, the position information of the standard TV station logo, and a matching threshold value of the standard TV station logo (401); and
if it is detected that there was an update, downloading the basic information of the standard TV station logo from the server (740, 120) and updating the same (402).

6. The method according to claim 5, wherein said downloading the basic information of the standard TV station logo from the server (740, 120) and updating the same (402) comprises:

sending local region information to the server (740, 120); and
receiving the basic information of at least one standard TV station logo fed back by the server (740, 120) based on the local region information.

7. The method according to any one of claims 1 to 6, wherein the method further comprises:

recording continuous n times of recognition results of a channel to which the TV screen image corresponds, n> 1 (406);
detecting whether there are more than m times of the same recognition result in the continuous n times of recognition results, $1 \leq m < n$ (407); and
if the detection result is that there are more than m times of the same recognition result, selecting the same recognition result as a correct recognition result, and creating a corresponding relation between the correct recognition result and the channel (408).

8. The method according to claim 7, wherein the method further comprises:

replacing the earliest recognition result in the continuous n times of recognition results by the last recognition result of the channel to which the TV screen image corresponds (409);
newly detecting whether there are more than m times of the same recognition result in the continuous n times of recognition results (410);
if the detection result is that there are more than m times of the same recognition result, continuing to detect whether this same recognition result is the same as the last correct recognition result (411); and
if the detection result is different, taking the same recognition result detected this time as a new correct recognition result (412).

9. A device for recognizing a TV station logo, **characterized in that**, the device comprises:

an image obtaining module (510) configured to obtain a TV screen image (202, 305, 403);
an area selection module (520) configured to, for each pre-stored standard TV station logo, select an area corresponding to position information of the standard TV station logo from the TV screen image according to the position information as a matching area of the standard TV station logo, the position information being a position of the standard TV station logo in the TV screen (204, 307, 404); and

a TV station logo recognition module (530) configured to recognize the TV station logo in the TV screen image based on a result of matching respective standard TV station logos with the corresponding matching areas (206, 405).

10. The device according to claim 9, wherein the TV station logo recognition module (530) comprises:

a color conversion unit (530a) configured to convert a color space of the TV screen image into a color space in which a luminance and a chrominance are separated (306);

a difference calculation unit (530b) configured to, for each standard TV station logo, calculate a difference between a luminance value of each pixel of the standard TV station logo and a luminance value of a corresponding pixel in the corresponding matching area (308);

a difference summing unit (530c) configured to calculate a sum of the differences calculated for respective pixels so as to obtain a matching value (309); and

a TV station logo recognition unit (530d) configured to recognize the standard TV station logo with the minimum matching value as the TV station logo in the TV screen image.

11. The device according to claim 10, wherein the difference calculation unit (530b) comprises:

a luminance detection sub-unit (530b1) configured to, for each pixel in the standard TV station logo, detect whether a luminance value of the pixel is 0; and

a difference calculation sub-unit (530b2) configured to, if the luminance value of the pixel is not 0, calculate the difference between the luminance value of the pixel and the luminance value of corresponding pixel in the corresponding matching area.

12. The device according to claim 10, wherein the TV station logo recognition module (530) further comprises:

a threshold value obtaining unit (530e) configured to obtain a matching threshold value to which the standard TV station logo with the minimum matching value corresponds (310), the matching threshold value being positively correlated with a size of an area of the standard TV station logo;

a threshold value comparison unit (530f) configured to compare the minimum matching value with the matching threshold value (311);

a first execution unit (530g) configured to, if the comparison result is that the minimum matching value is larger than the matching threshold value (312), which indicates the recognition fails, send the TV screen image to a server (740, 120); and

a second execution unit (530h) configured to, if the comparison result is that the minimum matching value is less than the matching threshold value, recognize the standard TV station logo with the minimum matching value as the TV station logo in the TV screen image (313).

13. The device according to any one of claims 9 to 12, wherein the device further comprises:

an information detection module (501) configured to detect whether basic information of the standard TV station logo stored in a server (740, 120) was updated, the basic information including the first two or all of the standard TV station logo, the position information of the standard TV station logo, and a matching threshold value of the standard TV station logo (401); and

an information download module (502) configured to, if it is detected that there was an update, download the basic information of the standard TV station logo from the server (740, 120) and update the same (402).

14. The device according to claim 13, wherein the information download module (502) comprises:

an information sending unit (502a) configured to send local region information to the server (740, 120); and

an information receiving unit (502b) configured to receive the basic information of at least one standard TV station logo fed back by the server (740, 120) based on the local region information.

15. The device according to any one of claims 9 to 14, wherein the device further comprises:

a result recording module (531) configured to record continuous n times of recognition results of a channel to which the TV screen image corresponds, n> 1 (406);
a first detection module (532) configured to detect whether there are more than m times of the same recognition result in the continuous n times of recognition results, 1 ≤m <n (407); and
a first execution module (533) configured to, if the detection result is that there are more than m times of the same recognition result, select the same recognition result as a correct recognition result, and create a corresponding relation between the correct recognition result and the channel (408).

**16.** The device according to claim 15, wherein the device further comprises:

a result replacement module (534) configured to replace the earliest recognition result in the continuous n times of recognition results by the last recognition result of the channel to which the TV screen image corresponds (409);
a second detection module (535) configured to newly detect whether there are more than m times of the same recognition result in the continuous n times of recognition results (410);
a third detection module (536) configured to, if the detection result is that there are more than m times of the same recognition result, continue to detect whether this same recognition result is the same as the last correct recognition result (411); and
a second execution module (537) configured to, if the detection result is different, take the same recognition result detected this time as a new correct recognition result (412).

**17.** A television (TV) (720, 110), **characterized in that**, the TV (720, 110) comprises the device for recognizing the TV station logo of any one of claims 9 to 16.

**18.** A TV (720, 110), wherein the TV (720, 110) comprises:

one or more processors (840);
a memory (820); and
one or more modules stored in the memory (820) and being configured to be executed by the one or more processors, the one or more modules having the following functions:

obtaining a TV screen image (202, 305, 403);
for each pre-stored standard TV station logo, selecting an area corresponding to position information of the standard TV station logo from the TV screen image according to the position information as a matching area of the standard TV station logo, the position information being a position of the standard TV station logo in the TV screen (204, 307, 404);
and
recognizing a TV station logo in the TV screen image based on a result of matching respective standard TV station logos with the corresponding matching areas (206, 405).

**19.** A system for recognizing a TV station logo, **characterized in that**, the system comprises a TV (720, 110) and a server (740, 120) connected with the TV (720, 110);
the TV (720, 110) is the TV (720, 110) of any one of claims 17 to 18.

**20.** A program product having stored therein instructions that, when executed by one or more processors (840) of a TV (720, 110), cause the TV (720, 110) to perform:

obtaining a TV screen image (202, 305, 403);
for each pre-stored standard TV station logo, selecting an area corresponding to position information of the standard TV station logo from the TV screen image according to the position information as a matching area of the standard TV station logo, the position information being a position of the standard TV station logo in the TV screen (204, 307, 404); and
recognizing a TV station logo in the TV screen image based on a result of matching respective standard TV station logos with the corresponding matching areas (206, 405).

**21.** A computer program which when executing on a processor, performs the method according to any one of claims 1 to 8.

Fig. 1

obtain a TV screen image — 202

for each pre-stored standard logo, select an area corresponding to position information of the standard logo from the TV screen image according to the position information as a matching area of the standard logo, the position information being a position of the standard logo in the TV screen — 204

recognize a logo in the TV screen image based on a result of matching respective standard logos with the corresponding matching areas — 206

Fig. 2

| TV | | Server |
|---|---|---|

301, the server obtains a TV screen image of a channel

302, the server recognizes a standard logo in the TV screen image and position information of the standard logo

303, the server generates basic information of the standard logo based on the standard logo and the position information of the standard logo

304, the server sends basic information of standard logo to the TV

305, the TV obtains a TV screen image

306, the TV converts a color space of the TV screen image into a color space in which a luminance and a chrominance are separated

307, for each of the pre-stored standard logos, the TV selects an area corresponding to position information of the standard logo from the TV screen image according to the position information as a matching area of the standard logo

308, for each standard logo, the TV calculates a difference between a luminance value of each pixel of the standard logo and a luminance value of a corresponding pixel in the corresponding matching area

309, the TV calculates a sum of the differences calculated for respective pixels so as to obtain a matching value

310, the TV obtains a matching threshold value to which the standard logo with the minimum matching value corresponds

311, the TV compares the minimum matching value with the matching threshold value

312, if the comparison result is that the minimum matching value is larger than the matching threshold value, the recognition fails, and the TV screen image is sent to the server

313, if comparison result is that the minimum matching value is less than the matching threshold value, the standard logo with the minimum matching value is recognized as logo in the TV screen image

Fig. 3A

standard TV
station logo A

standard TV station
logo B

16:9

Fig. 3B

standard TV station
logo A

16:9

standard TV station
logo A

4:3

Fig. 3C

a1（50,50）

0

x

16:9

standard TV
station logo A

a2（200,100）

y

Fig. 3D

detect whether basic information of a standard logo stored in the server was updated, the basic information including the first two or all of the standard logo, position information of the standard logo, and a matching threshold value of the standard logo ⌐ 401

if it is detected that there was an update, download basic information of standard logo from the server and update the same ⌐ 402

obtain a TV screen image ⌐ 403

for each pre-stored standard logo, select an area corresponding to position information of the standard logo from the TV screen image according to the position information as a matching area of the standard logo ⌐ 404

recognize a logo in the TV screen image based on result of matching respective standard logos with corresponding matching areas ⌐ 405

record continuous n times of recognition results of a channel to which the TV screen image corresponds, n> 1 ⌐ 406

detect whether there are more than m times of the same recognition result in the continuous n times of recognition results, $1 \leqslant m < n$ ⌐ 407

if the detection result is that there are more than m times of the same recognition result, select the same recognition result as a correct recognition result, and create a corresponding relation between the correct recognition result and the channel ⌐ 408

replace the earliest recognition result in the continuous n times of recognition results by the last recognition result of the channel to which the TV screen image corresponds, k> n ⌐ 409

newly detect whether there are more than m times of the same recognition result in the continuous n times of recognition results ⌐ 410

if the detection result is that there are more than m times of the same recognition result, continue to detect whether this same recognition result is the same as the last correct recognition result ⌐ 411

if the detection result is different, take the same recognition result detected this time as a new correct recognition result ⌐ 412

Fig. 4

510

image obtaining module

520

area selection module

530

logo recognition module

Fig. 5

information detection module    501

information download module 502

information
sending unit    502a

information
receiving unit    502b

image obtaining
module    510

area selection
module    520

color conversion
unit    530a

luminance detection
sub-unit    530b1

difference
calculation sub-unit    530b2

difference calculation unit 530b

difference
summing unit    530c

logo recognition
unit    530d

threshold value
obtaining unit    530e

threshold value
comparison unit    530f

first execution
unit    530g

second execution
unit    530h

logo recognition module 530

result recording module    531

first detection module    532

first execution module    533

result replacement module    534

second detection module    535

third detection module    536

second execution module    537

Fig. 6

720    740

| TV | Server |
|---|---|

Fig. 7

800

850

| power supply |
|---|

840

820

| memory |
|---|

processor

810

| communication module |
|---|

830

| input unit |
|---|
| touch panel |
| other input devices |

831

832

Fig. 8